# EUROPÄISCHE PATENTSCHRIFT

(11) **EP 2 642 403 B1**
(45) Veröffentlichungstag und Bekanntmachung des Hinweises auf die Patenterteilung: **23.07.2014**
(21) Anmeldenummer: 12161076.0
(22) Anmeldetag: 23.03.2012
(51) Int. Cl.: G06F 13/40, G05B 19/418

(54) **Schnittstellenvorrichtung und Verfahren für einen konsistenten Datenaustausch**
Interface device and method for consistent data exchange
Dispositif d'interface et procédé d'échange stable de données

(43) Veröffentlichungstag der Anmeldung: 25.09.2013
(73) Patentinhaber: Siemens Aktiengesellschaft, 80333 München (DE)
(72) Erfinder: Klug, Andreas, 08141 Reinsdorf (DE); Beyer, Hans-Jürgen, 08134 Wildenfels (DE); Bodenschatz, Markus, 09337 Hohenstein-Ernstthal (DE)

(56) Entgegenhaltungen:
- EP-A1- 0 525 214
- WO-A2-02/086634
- DE-A1- 19 529 718
- DE-A1- 19 909 081
- DE-A1-102010 027 286

## Beschreibung

Die Erfindung betrifft eine Schnittstellenvorrichtung für den Datenaustausch von Daten zwischen einem ersten Bussystem und einem zweiten Bussystem, wobei an das zweite Bussystem ein Ein-/Ausgabegerät anschließbar ist und innerhalb des Ein-/Ausgabegerätes ein Steckplatz und ein Untersteckplatz zum Ausgeben oder Annehmen von Ein-/Ausgabe-Daten adressierbar sind, umfassend eine erste Sende-/Empfangseinrichtung für Daten des ersten Bussystems, eine zweite Sende-/Empfangseinrichtung für Daten des zweiten Bussystems, eine Datenübergabeeinrichtung mit einem Übergabespeicher, einer Steuereinrichtung ausgestaltet zur Steuerung der Datenablage und zur Koordinierung von Schreibzugriffen in die bzw. auf die Datenübergabeeinrichtung.

Insbesondere in der Automatisierungstechnik erfolgt ein Austausch von Nutzdaten, insbesondere Ein- und Ausgabe-Daten von zu automatisierenden Komponenten wie Maschinen, Stellantrieben oder Sensoren, zwischen Ein-/Ausgabegeräten, wie z.B. modulare dezentrale Peripheriesysteme, und übergeordneten Automatisierungsgeräten über Feldbusse. Als Feldbusse sind beispielsweise der Profibus oder das Profinet bekannt. Innerhalb eines Ein-/Ausgabegerätes einer dezentralen Peripheriestation können Nutzdaten über ein Rückwandbussystem der dezentralen Peripheriestation auf einzelne Module verteilt bzw. von den einzelnen Modulen ausgelesen werden. Da der Feldbus und das Rückwandbussystem in der Regel asynchron zueinander arbeiten und auch nur teilweise eine Aktualisierung von Daten, beispielsweise eines Subslot-Nutzdatenpaketes, möglich sind, ist für die Sicherung einer Datenkonsistenz zwischen den beiden Bussystemen ein Zwischenpuffer notwendig.

Derartige Zwischenpuffer oder auch Wechselpuffer sind aus der europäischen Patentschrift EP 1 253 494 B1 bekannt. Bei den bekannten Steuer- und/oder Regelungssystem wobei über einen Feldbus, wobei eine dezentrale Peripherie angesprochen wird, ist es von Nachteil, dass sie mit den heutigen Geschwindigkeitsanforderungen an einen Nutzdatenaustausch nicht mehr Schritt halten kann.

Die deutsche Patentschrift DE102010027286 offenbart ein Verfahren zur Datenübertragung innerhalb eines Automatisierungssystems, umfassend eine zentrale Verarbeitungseinheit mit mehreren Peripheriemodulen und eine Mehrzahl von mit der zentralen Verarbeitungseinheit verbundenen dezentralen Peripherieeinheiten mit zugehörigen Peripheriemodulen.

Es ist daher die Aufgabe der Erfindung eine Schnittstellenvorrichtung für den Datenaustausch bzw. ein Verfahren für den konsistenten Datenaustausch bereitzustellen, welche optimiert und schneller den bisherigen Datenaustausch im Hinblick auf eine konsistente Datensicherung erreicht.

Die Aufgabe wird dadurch gelöst, dass die Steuereinrichtung der eingangs genannten Schnittstellenvorrichtung mit einem Listenspeichermittel in Verbindung steht, in welchem eine Datenstruktur zur Adressierung der Daten für das Ein-/Ausgabegerät abgespeichert ist, wobei die Datenstruktur für eine Mehrzahl von Untersteckplätzen in einen Telegrammformat der Telegramme des ersten Bussystems vorgegeben ist und jeweils einen Speicheroffset bezogen auf eine Startadresse des Übergabespeichers und eine Datenlänge der Ein-/Ausgabe-Daten aufweist, dabei ist den Untersteckplätzen in der Datenstruktur ein Index zugeordnet, wobei die Steuereinrichtung weiterhin dazu ausgestaltet ist bei einer Aktualisierung der Ein-/Ausgabe-Daten mit Hilfe des Index die Schreibzugriffe in der Datenübergabeeinrichtung byteweise zu koordinieren. Die genannte Schnittstellenvorrichtung wird beispielsweise in einem Interfacemodul zwischen einem übergeordneten Automatisierungsgerät und einer untergeordneten dezentralen Peripherie eingesetzt. Bezogen auf eine Profinetanwendung umfasst ein derartiges Profinet I/O-System folgende Geräte: Einen I/O-Controller, welcher eine Steuerung darstellt, die die Automatisierungsaufgaben löst. Ein I/O-Device, welches ein Feldgerät, insbesondere ein Ein-/Ausgabegerät darstellt, das von dem I/O-Controller kontrolliert und gesteuert wird. Ein I/O-Device kann aus mehreren Modulen und Submodulen bestehen. Ein I/O-Supervisor, welches ein Entwicklungs-Werkzeug, typischerweise basierend auf einem PC, darstellt, um die einzelnen I/O-Devices und I/O-Controller zu parametrieren und zu diagnostizieren. Bezogen auf das Listenspeichermittel werden die Parametrierungsdaten der I/O-Device, also der Ein-/Ausgabegeräte, mit Vorteil für die byteweise Koordinierung von Schreibzugriffen in der Datenübergabeeinrichtung der Schnittvorrichtung genutzt. Mit dem Listenspeichermittel steht nun in der Schnittstellenvorrichtung eine Referenzliste zur Verfügung, welche zu einer schnellen Adressierung der Daten in der Datenübergabeeinrichtung bzw. in dem Übergabespeicher genutzt wird.

Mit Vorteil ist der Übergabespeicher in einen Ausgabezwischenspeicher und einen Eingabezwischenspeicher aufgeteilt, dabei ist der Ausgabezwischenspeicher dazu ausgestaltet Daten von dem ersten Bussystem zwischen zu speichern und für das zweite Bussystem als Ausgabedaten für das Ein-/Ausgabegerät bereitzustellen und der Eingabezwischenspeicher ist dazu ausgestaltet Daten von dem zweiten Bussystem zwischen zu speichern und für das erste Bussystem als Eingabedaten des Ein-/Ausgabegerätes bereitzustellen.

Vorzugsweise ist der Übergabespeicher als ein erster Übergabespeicher und als ein zweiter Übergabespeicher ausgestaltet, wobei die Übergabespeicher derart mit der Steuereinrichtung in Verbindung stehen, dass eine Datenablage oder ein Schreibzugriff entweder nur auf den ersten Übergabespeicher oder nur auf den zweiten Übergabespeicher erfolgen kann. Dabei weist nun jeder Übergabespeicher wiederum je einen Ausgabezwischenspeicher und einen Eingabezwischenspeicher auf.

Um die Datenübergabe und insbesondere die Datenkonsistenz weiter zu optimieren, weist die Steuereinrichtung ein Sperrmittel auf, welches ausgestaltet ist vor einem Schreibzugriff mit Ausgabedaten auf den Ausgabezwischenspeicher oder vor einem Lesezugriff von Eingabedaten auf den Eingabezwischenspeicher einen Statusindikator zu setzen, dabei ist die Steuereinrichtung weiterhin dazu ausgestaltet, dass das Sperrmittel bei dem gesetzten Statusindikator einen Wechsel zwischen dem ersten und dem zweiten Übergabespeicher blockiert.

Bei dem byteweisen Aufbau des Übergabespeichers hat es sich als besonders vorteilhaft herausgestellt, dass die Steuereinrichtung weiterhin dazu ausgestaltet ist bei einem Lesezugriff von Ausgabedaten aus dem Ausgabezwischenspeicher eine Semaphore abzufragen und je nach Zustand der Semaphore entweder die Ausgabedaten aus dem ersten Übergabespeicher oder aus dem zweiten Übergabespeicher auszulesen. Eine Semaphore-Variable ist beispielsweise eine Datenstruktur, die aus einer Ganzzahl und aus Nutzungsoperationen, wie beispielsweise "Reservieren, Probieren" und "Freigeben" besteht. Sie eignet sich insbesondere zur Verwaltung beschränkter, zählbarer Ressourcen, auf die vorzugsweise mehrere Prozesse oder Threads zugreifen sollen, wie etwa einem Erzeuger und einem Verbraucher. Im Gegensatz zu Sperrvariablen, dem Lock, brauchen die Aktivitätsträger, die "Reservieren" und "Freigeben" nicht identisch zu sein.

Um ein Aktualisieren von Daten zu optimieren ist der Übergabespeicher byteweise aufgebaut und jeden Byte ist eine Semaphore mit dem Index zugeordnet, dabei ist einem Byte im ersten Übergabespeicher die Semaphore mit einem ersten Zustand zugeordnet und einem korrespondierenden Byte im zweiten Übergabespeicher die Semaphore mit einem zweiten Zustand zugeordnet, wobei der zweite Zustand dem negierten ersten Zustand entspricht.

Damit im laufenden Betrieb eines Automatisierungsgerätes mit einer dezentralen Peripherie bezüglich der Datenvergabe der I/O-Device, beispielsweise bei einem Auf- oder Abbau zusätzlicher Application Relationchips (Verbindungen) mit weiteren Profinet-Controllern, ein Rangieren möglich wird, ist das Listenspeichermittel doppelt ausgeführt und als ein erstes Listenspeichermittel und als ein zweites Listenspeichermittel ausgestaltet.

Im Hinblick auf die bereits genannte industrielle Automatisierungstechnik ist eine besonders vorteilhafte Ausprägung der Schnittstellenvorrichtung ausgestaltet zum Betrieb im Verbund eines industriellen Automatisierungssystems, wobei die erste Sende-/Empfangseinrichtung für Daten des ersten Bussystems ausgestaltet ist Daten eines Feldbusses der industriellen Automatisierungstechnik zu Senden und zu Empfangen und die zweite Sende-/Empfangseinrichtung für Daten des zweiten Bussystems ausgestaltet ist Daten eines Rückwandbusses des Ein-/Ausgabegerätes, welches als eine dezentrale Peripherie der industriellen Automatisierungstechnik ausgestaltet ist, zu senden und zu empfangen, dabei weist die Steuereinrichtung weiterhin ein Rückwandbussteuerwerk und ein Feldbussteuerwerk auf.

Die eingangs genannte Aufgabe den Betrieb in einen dezentralen Peripheriesystem zu optimieren, wird ebenso durch ein Verfahren für den konsistenten Datenaustausch von Daten zwischen einem ersten Bussystem und einem zweiten Bussystem gelöst, wobei an das zweite Bussystem ein Ein-/Ausgabegerät angeschlossen wird und innerhalb des Ein-/Ausgabegerätes ein Steckplatz und ein Untersteckplatz zum Ausgeben oder Annehmen von Ein-/Ausgabe-Daten adressiert wird, wobei eine Datenübergabeeinrichtung mit einem Übergabespeicher, über eine Steuereinrichtung zur Steuerung der Datenablage und zur Koordinierung von Schreibzugriffen in die bzw. auf die Datenübergabeeinrichtung gesteuert wird, wobei die Steuereinrichtung eine Datenstruktur aus einem Listenspeichermittel auswertet, wobei die Datenstruktur zur Adressierung der Daten für das Ein-/Ausgabegerät vor Beginn des Datenaustausches in dem Listenspeichermittel abgespeichert wurde und die Datenstruktur aufgrund einer Mehrzahl von Untersteckplätzen in einem Telegrammformat der Telegramme des ersten Bussystems definiert wird und jeweils einen Speicheroffset bezogen auf eine Startadresse des Übergabespeichers und eine Datenlänge der Ein-/Ausgabe-Daten aufweist, dabei wird den Untersteckplätzen in der Datenstruktur ein Index zugeordnet, wobei die Steuereinrichtung bei einer Aktualisierung der Ein-/Ausgabe-Daten mit Hilfe des Index die Schreibzugriffe in Datenübergabeeinrichtung byteweise koordiniert.

Vorzugsweise wird der Übergabespeicher in einen Ausgabezwischenspeicher und einen Eingabezwischenspeicher aufgeteilt, dabei wird der Ausgabezwischenspeicher betrieben Daten von dem ersten Bussystem zwischen zu speichern und für das zweite Bussystem als Ausgabedaten für das Ein-/Ausgabegerät bereitzustellen und der Eingabezwischenspeicher wird betrieben Daten von den zweiten Bussystem zwischen zu speichern und für das erste Bussystem als Eingabe-Daten des Eingabe-/Ausgabegerätes bereitzustellen.

Der Übergabespeicher wird in einen ersten Übergabespeicher und einen zweiten Übergabespeicher unterteilt, und eine Datenablage oder ein Schreibzugriff wird derart gesteuert, dass entweder nur auf den ersten Übergabespeicher oder nur auf den zweiten Übergabespeicher zugegriffen wird.

Verfahrensgemäß wird in der Steuereinrichtung ein Sperrmittel betrieben, wobei vor einem Schreibzugriff mit Ausgabedaten auf den Ausgabezwischenspeicher oder vor einem Lesezugriff von Eingabedaten auf den Eingabezwischenspeicher ein Statusindikator gesetzt wird, und bei dem gesetzten Statusindikator ein Wechsel zwischen dem ersten und dem zweiten Übergabespeicher blockiert wird.

Mit Blick auf die byteweise Adressierung des Übergabespeichers, insbesondere der Ausgabezwischenspeicher und der Eingabezwischenspeicher wird bei einem Lesezugriff von Ausgabedaten aus dem Ausgabezwischenspeicher eine Semaphore abgefragt und je nach Zustand der Semaphore entweder die Ausgabedaten aus dem ersten Übergabespeicher oder aus dem zweiten Übergabespeicher gelesen. Da die Daten im Übergabespeicher byteweise abgelegt werden und jedem Byte eine Semaphore mit dem Index zugeordnet wird, wird einem Byte im ersten Übergabespeicher die Semaphore mit einem ersten Zustand zugeordnet und einem korrespondierenden Byte im zweiten Übergabespeicher die Semaphore mit einem zweiten Zustand zugeordnet, wobei der zweite Zustand dem negierten ersten Zustand entspricht. Für die Datenkonsistenz ist der Übergabespeicher zweifach ausgelegt, darum wird hier von einem Byte und einem korrespondierenden Byte gesprochen.

Das Listenspeichermittel wird vorteilhafter Weise doppelt ausgeführt und doppelt betrieben, und zwar wird ein erstes Listenspeichermittel und ein zweites Listenspeichermittel angelegt.

Das Verfahren findet eine besonders vorteilhafte Anwendung im Verbund eines industriellen Automatisierungssystems, wobei die erste Sende-/Empfangseinrichtung für Daten eines Feldbusses der industriellen Automatisierungstechnik betrieben wird und die zweite Sende-/Empfangseinrichtung für Daten eines Rückwandbusses des Ein-/Ausgabegerätes, welches als eine dezentrale Peripherie der industriellen Automatisierungstechnik ausgestaltet ist, betrieben wird. Dabei wird in der Steuereinrichtung weiterhin ein Rückwandbussteuerwerk und ein Feldbussteuerwerk betrieben.

Die Zeichnung zeigt ein mögliches Ausgestaltungsbeispiel der Schnittstellenvorrichtung bzw. einen möglichen Verfahrensablauf. Es zeigen:
- FIG 1: ein Automatisierungsgerät mit einer angeschalteten dezentralen Peripherie,
- FIG 2: eine schematische Blockschaltbilddarstellung eines Steuerwerkes und eines Listenspeichermittels einer Schnittstellenvorrichtung,
- FIG 3: einen Programmablaufplan für das Schreiben von Ausgabedaten,
- FIG 4: einen Programmablaufplan für das Lesen von Ausgabedaten,
- FIG 5: einen Programmablaufplan für das Schreiben von Daten eines Rückwandbussteuerwerks in einen Eingabezwischenspeicher und die
- FIG 6: einen Programmablaufplan für das Lesen von Daten aus dem Eingabezwischenspeicher.

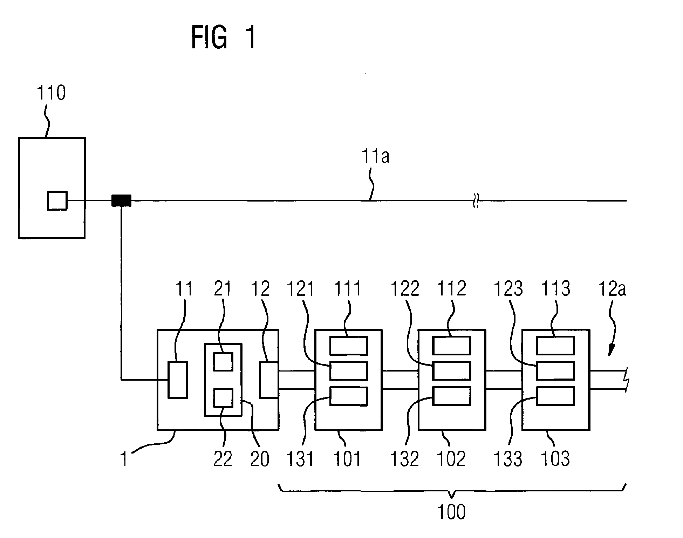

Gemäß FIG 1 ist ein Automatisierungsgerät 110 an ein erstes Bussystem 11a angeschlossen, wobei an das erste Bussystem 11a eine Schnittstellenvorrichtung 1 mit einem Ein-/Ausgabegerät 100 in einer modularen dezentralen Peripherieaufbauweise angeschlossen ist. Über eine erste Sende-/Empfangseinrichtung 11 steht die Schnittstellenvorrichtung 1 mit dem Automatisierungsgerät 110 in Verbindung. Über eine zweite Sende-/Empfangseinrichtung 12 steht die Schnittstellenvorrichtung 1 über ein zweites Bussystem 12a mit dem Ein-/Ausgabegerät 100 in Verbindung, wobei das Ein-/Ausgabegerät 100 einen ersten Steckplatz 101, einen zweites Steckplatz 102 und einen dritten Steckplatz 103 aufweist. Die Steckplätze 101,102,103 sind wiederum in jeweils drei Untersteckplätze nämlich 111,121,131 und 112,122,132 und 113,123,133 aufgeteilt.

Für einen Datenaustausch zwischen dem Automatisierungsgerät 110 und den Steckplätzen 101,...,103, welche als Ein-/Ausgabebaugruppen ausgestaltet sind, weist die Schnittstellenvorrichtung 1 eine Datenübergabeeinrichtung 20 auf, welche in einen ersten Übergabespeicher 21 und in einen zweiten Übergabespeicher 22 aufgeteilt ist.

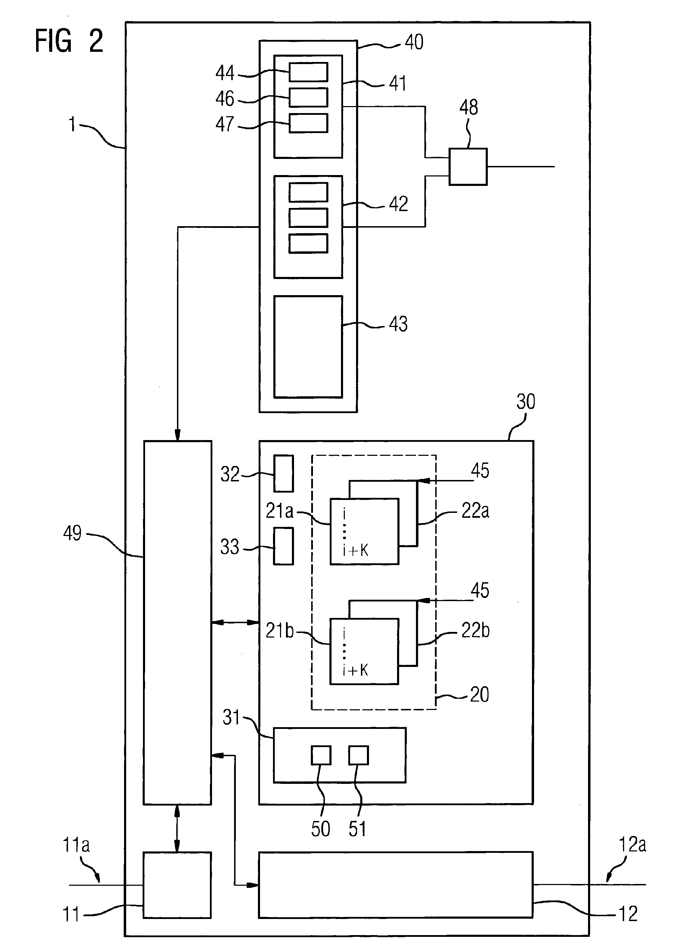

Gemäß FIG 2 ist die aus FIG 1 bekannte Schnittstellenvorrichtung 1 schematisch in einer Blockschaltbilddarstellung dargestellt. Die Schnittstellenvorrichtung 1 für den Datenaustausch von Daten des ersten Bussystems 11a und des zweiten Bussystems 12a ist mit dem ersten Bussystem 11a an eine erste Sende-/Empfangseinheit 11 angeschlossen, wobei das erste Bussystem 11a beispielsweise als ein industrieller Profinet-Feldbus ausgestaltet ist. Das zweite Bussystem 12a, welches beispielsweise als ein Rückwandbus eines modular aufgebauten Peripheriesystems ausgestaltet ist, ist an der zweiten Sende-/Empfangseinrichtung 12a angeschlossen. Die Sende-/Empfangseinrichtung 11,12 sind mit einem Adressierwerk 49 verbunden. Das Adressierwerk 49 bekommt über ein Listenspeichermittel 40 eine Datenstruktur zur Adressierung der Daten für das Ein-/ Ausgabegerät 100 (siehe FIG 1) mitgeteilt, die Datenstruktur enthält dabei eine Mehrzahl von Untersteckplätzen 111,112,113 in einen Telegrammformat der Telegramme des ersten Bussystems 11a.

Die Datenstruktur weist dabei jeweils folgenden Aufbau auf: Pro zu adressierendes Byte in dem ersten Übergabespeicher 21 oder dem zweiten Übergabespeicher 22 steht ein Speicheroffset 44 bezogen auf eine Startadresse 45 des ersten und/oder zweiten Übergabespeichers 21,22 zur Verfügung. Weiterhin weist das Listenspeichermittel 40 eine Datenlänge 46 der Ein-/Ausgabe-Daten auf. Die Datenstruktur mit dem Speicheroffset 44 und der Datenlänge 46 ist über einen Index i den Untersteckplätzen 111,112,113 zugeordnet. Das Listenspeichermittel 40 ist als ein erstes Listenspeichermittel 41 und als ein zweites Listenspeichermittel 42 doppelt ausgeführt. Über einen Selektor 48 wird jeweils bestimmt, ob das erste Listenspeichermittel 41 oder das zweite Listenspeichermittel 42 Eingabedaten für das Adressierwerk 49 bereitstellt.

Ein Umschalten von einem ersten Listenspeichermittel 41 zu dem zweiten Listenspeichermittel 42 kann vorteilhaft sein, wenn beispielsweise eine Profinet I/O Konstellation über ein Engineering System im laufenden Betrieb verändert wird. So kann bis zu dem Zeitpunkt an dem die veränderten Daten übernommen werden sollen mit der Konfiguration in dem ersten Listenspeichermittel 41 gearbeitet werden und nach einem Umschaltzeitpunkt mit einer neuen Konfiguration, welche beispielsweise im zweiten Listenspeichermittel 42 abgespeichert wurde, gearbeitet werden.

Das Adressierwerk 49 wird über eine Kommandoliste 43 unterstützt. In diesem Beispiel beinhaltet das Steuerwerk 30 gleichzeitig die Datenübergabeeinrichtung 20, welche sich grundsätzlich in einen ersten Übergabespeicher 21 und in einen zweiten Übergabespeicher 22 unterteilt, wobei der erste Übergabespeicher 21 wiederum in einen ersten Ausgabezwischenspeicher 21a und in einen zweiten Ausgabezwischenspeicher 22a und der zweite Übergabespeicher in einen ersten Eingabezwischenspeicher 21b und in einen zweiten Eingabezwischenspeicher 22b unterteilt. Die Startadresse 45 zeigt jeweils auf einen Anfang eines Speicherbereiches.

Zur Koordinierung von Schreib-/Lesezugriffen auf die Speicherbereiche steht ein Rückwandbussteuerwerk 32 und ein Feldbussteuerwerk 33 zur Verfügung.

Um einen koordinierten Zugriff zu erhalten, werden ein erster Statusindikator 50 und ein zweiter Statusindikator 51 über ein Sperrmittel 31 gesetzt.

Der erste Statusindikator 50 könnte auch als ein globales Bit OB_Freeze bezeichnet werden, z.B. ein Bit in einem Register des Steuerwerks 30, und muss per Software vor bzw. nach einem Zugriff auf den Ausgabezwischenspeicher gesetzt bzw. zurückgesetzt werden. Ebenso kann der zweite Statusindikator 51 als ein globales Bit IB_Freeze per Software vor bzw. nach einem Zugriff auf den Eingabezwischenspeicher gesetzt bzw. gelöscht werden, auch dieses Bit ist ein Bit in einem Register des Steuerwerks 30.

Dazu wird in der Steuereinrichtung 30 das Sperrmittel 31 derart betrieben, dass vor einem Schreibzugriff mit Ausgabedaten auf den Ausgabezwischenspeicher 21a, 22a oder vor einem Lesezugriff von Eingabedaten auf den Eingabezwischenspeicher 21b,22b entweder der erste Statusindikator 50 oder der zweite Statusindikator 51 gesetzt wird, damit bei einem der gesetzten Statusindikatoren 50,51 ein Wechsel zwischen dem ersten und dem zweiten Übergabespeicher blockiert wird, wodurch eine Datenkonsistenz erreicht wird.

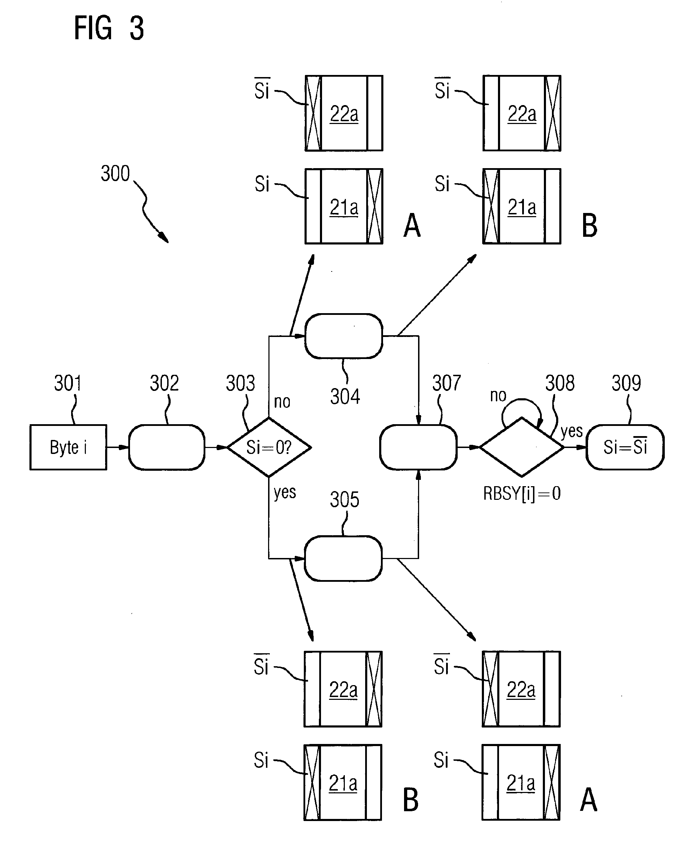

Die FIG 3 zeigt einen Programmablauf 300 für das Schreiben von Ausgabedaten, wobei die Ausgabedaten von dem in FIG 1 gezeigten Automatisierungsgerät 110 über das erste Bussystem 11a an die Schnittstellenvorrichtung 1 gesendet werden und in der ersten Sende-/Empfangseinrichtung 11 von der Schnittstellenvorrichtung 1 entgegengenommen werden. Der Programmablauf 300 zeigt eine mögliche Implementierung in einer passenden Programmiersprache für beispielsweise einen ASIC-Baustein, wobei dann in der Schnittstellenvorrichtung 1 dieser ASIC-Baustein als Steuereinrichtung 30 eingesetzt werden würde.

Der Programmablauf 300 startet mit einem Schreibauftrag 301, in welchem der Auftrag enthalten ist ein Byte i, welches ebenso in dem Listenspeichermittel 40 mit dem Index i versehen ist, in einen von den beiden Ausgabezwischenspeichern 21a und 22a zu schreiben. In welchen von den beiden Ausgabezwischenspeichern 21a,22a letztendlich das Byte i geschrieben wird, entscheidet sich über eine Abfrageoperation 303.

Zuvor wird allerdings über eine Setzeoperation 302 der erste Statusindikator 50 mit dem Wert "1" vorbesetzt. Eine in dem beispielsweise ASIC-Baustein implementierte Software wird vorzugsweise vor dem Beschreiben von Daten in die Datenübergabeeinrichtung 20 bzw. vor dem Lesen von Daten aus der Datenübergabeeinrichtung beispielsweise ein Bit setzen, wobei das gesetzte Bit der Anzeige dient, dass zu diesem Zeitpunkt kein Speicherwechsel durchgeführt werden darf. In Bezug auf das Schreiben von Ausgabedaten bedeutet dies, dass der erste Ausgabezwischenspeicher 21a und der zweite Ausgabezwischenspeicher 22a eingefroren werden.

Mit der Abfrageoperation 303 wird eine Semaphore Sᵢ abgefragt. Die Semaphore Sᵢ ist beispielsweise auch als ein Bit ausgestaltet, welches den Zustand "0" oder "1" annehmen kann.

Gemäß der FIG 3 ist zusätzlich zu dem Programmablauf 300 ein erster stabiler Zustand A und ein zweiter stabiler Zustand B dargestellt. In dieser Darstellung der stabilen Zustände A,B ist jeweils der Zustand eines Bytes eines Nutzdatenblockes, vorzugsweise eines Untersteckplatzes, dargestellt. Dabei ist dieses Byte ein Auszug aus dem byteweise orientierten ersten Übergabespeicher 21 bzw. zweiten Übergabespeicher 22. Insbesondere bei dem Programmablauf 300 für das Schreiben von Ausgabedaten ist in der Darstellung des ersten stabilen Zustandes A und des zweiten stabilen Zustandes B ein Byte des ersten Ausgabezwischenspeichers 21a bzw. ein Byte des zweiten Ausgabezwischenspeichers 22 a gemeint.

Die Semaphore Sᵢ bzw. der negierte Wert der Semaphore Sᵢ⁻¹ stellen jeweils die Zulässigkeit eines möglichen Schreibzugriffes auf diese byteorientierte Adresse der Ausgabezwischenspeicher 21a bzw. 22a dar.

Von der Abfrageoperation 303 der Semaphore Si gelangt man über einen NEIN-Zweig, d.h. die Semaphore Sᵢ hat den Wert Sᵢ = "1", zu einem Schreibzugriff 304 auf den ersten Ausgabezwischenspeicher 21a.

Der eingangs initiierte Schreibauftrag 301 hat nun eine Schreiberlaubnis in die mit dem Index i adressierte bytegranulare Speicherzelle des ersten Ausgabezwischenspeichers 21a ein Pfeil ausgehend von dem NEIN-Zweig der Abfrageoperation 303 zeigt symbolisch auf den ersten stabilen Zustand A, welches eine Darstellung vor dem Schreibzugriff ist. Nach dem Schreibzugriff 304 auf den ersten Ausgabespeicher 21a zeigt ein weiterer Pfeil symbolisch auf den zweiten stabilen Zustand B der bytegranularen Speicherzellen des ersten Ausgabezwischenspeichers 21a und des zweiten Ausgabezwischenspeichers 22a.

Der zweite stabile Zustand B wurde über eine Anmeldung 307 zum Speicherwechsel und über eine weitere Abfrageoperation 308, ob der erste Statusindikator 50 wieder auf "0" gesetzt ist und ob eine weitere Variable "Rückwandbus in Betrieb" (Kurzform: RBSY[i]) ebenfalls den Wert "0" aufweist erreicht. Ist dies der Fall, so wird über eine Speicherwechselaktion 309 die entsprechend zuvor initiierte Semaphore Sᵢ negiert und es wird ein Hilfsvektor gesetzt (New Data[N:0]) welcher zur Anmeldung des Speicherwechsels nach einem Schreibzugriff auf das Byte i genutzt wird.

Hätte die Abfrageoperation 303 den Wert der Semaphoren Sᵢ = "0" ergeben, so wäre der Programmablauf 300 mit dem JA-Zweig der Abfrageoperation 303 weitergeführt worden und es wäre ein Schreibzugriff 305 auf den zweiten Ausgabezwischenspeicher 22a erlaubt worden. Da die Semaphore Sᵢ den Wert "0" aufweist wäre für diesen Zustand nun der zweite stabile Zustand B eines bytegranularen Speicherwertes in dem Ausgabezwischenspeicher 21a,22a gültig. Dies wird wieder durch einen symbolischen Pfeil angedeutet. Nach einem erfolgreichen Schreibzugriff 305 auf den zweiten Ausgabezwischenspeicher 22a und der Anmeldung 307 zum Speicherwechsel mit der kontinuierlichen Abfrageoperation 308, ob der erste Statusindikator 50 = "0" und die RBSY[i]-Variable = "0" ist und die Semaphore Sᵢ letztendlich in der Speicherwechselaktion 309 negiert wurde, ist in diesem unteren Teil des Programmablaufs 300 nach dem Schreibzugriff 305 nun ausgehend von dem zweiten stabilen Zustand B der erste stabile Zustand A erreicht.

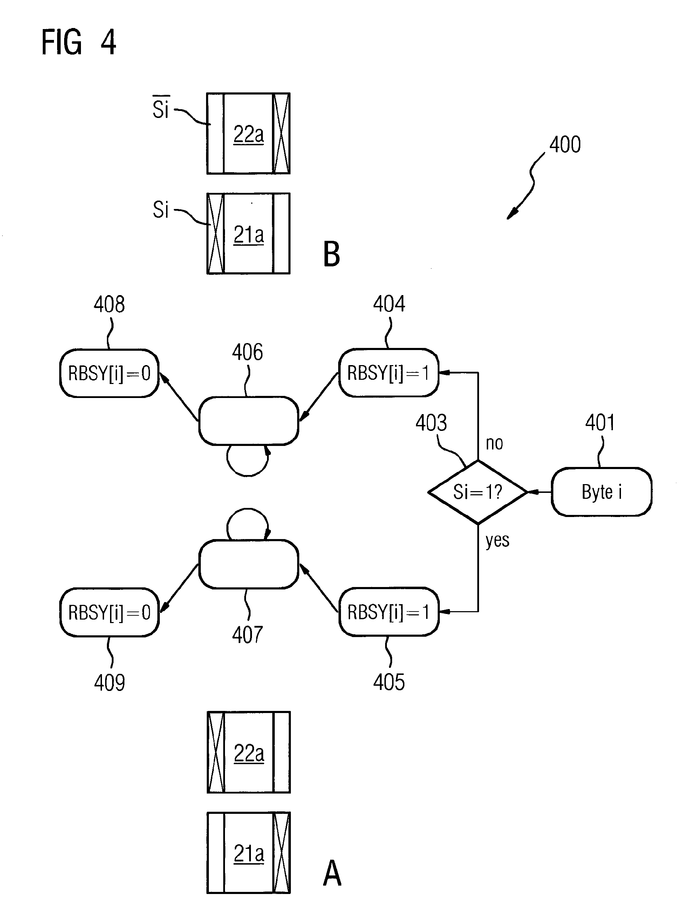

Die FIG 4 zeigt einen Programmablauf 400 für das Lesen von Ausgabedaten aus dem entsprechenden ersten Ausgabezwischenspeicher 21a oder den zweiten Ausgabezwischenspeicher 22a. Der Programmablauf 400 startet mit einem Leseauftrag 401 eines Byte i. Das Byte i kann beispielsweise ein Byte innerhalb eines Nutzdatenblockes eines Untersteckplatzes sein. Die Speicheradresse dieses Bytes i wird mittels des Listenspeichermittels 40 ermittelt.

Bezogen auf FIG 1 bedeutet der Leseauftrag 401, dass das Ein-/Ausgabegerät 100, beispielsweise über den ersten Steckplatz 101, über den ersten Untersteckplatz 111 ein Byte oder einen ganzen Nutzdatenblock über den Rückwandbus der Schnittstellenvorrichtung 1 bereitgestellt hat.

Dem Leseauftrag 401 folgt eine Abfrageoperation 403, ob die zu dem Byte i zugehörige Semaphore Sᵢ = "1" ist. Ist dies der Fall wird die Abfrageoperation 403 über einen JA-Zweig verlassen und es folgt eine Setzeoperation 405 in welcher die Variable RBSY[i] = "1" gesetzt wird. Nun existiert eine Kennzeichnung, dass der Rückwandbus in Betrieb ist. Ein Lesezugriff 407 auf den zweiten Ausgabezwischenspeicher 22a darf nun erfolgen. Als Symbolisierung für den bytegranularen Zugriff ist der erste stabile Zustand A dargestellt. Nach einem erfolgreichen Lesezugriff auf den zweiten Ausgabezwischenspeicher 22a kann über eine weitere Setzeoperation die Variable RBSY[i] auf "0" zurückgesetzt werden, welches bedeutet, der Rückwandbus ist nicht in Betrieb.

Wurde die Abfrageoperation 403 mit dem NEIN-Zweig verlassen, welches bedeutet, die Semaphore Sᵢ hatte den Wert "0" so wird wiederum über eine Setzeoperation 404 die Variable RBSY[i] gesetzt und es folgt ein Lesezugriff 406 auf den ersten Ausgabezwischenspeicher 21a. Dieser Zustand wird wiederum symbolisch durch den zweiten stabilen Zustand B symbolisiert. Nach dem erfolgreichen Lesezugriff 406 auf den ersten Ausgabezwischenspeicher 21a wird in einer Setzeoperation 408 die Variable RBSY[i] auf "0" gesetzt.

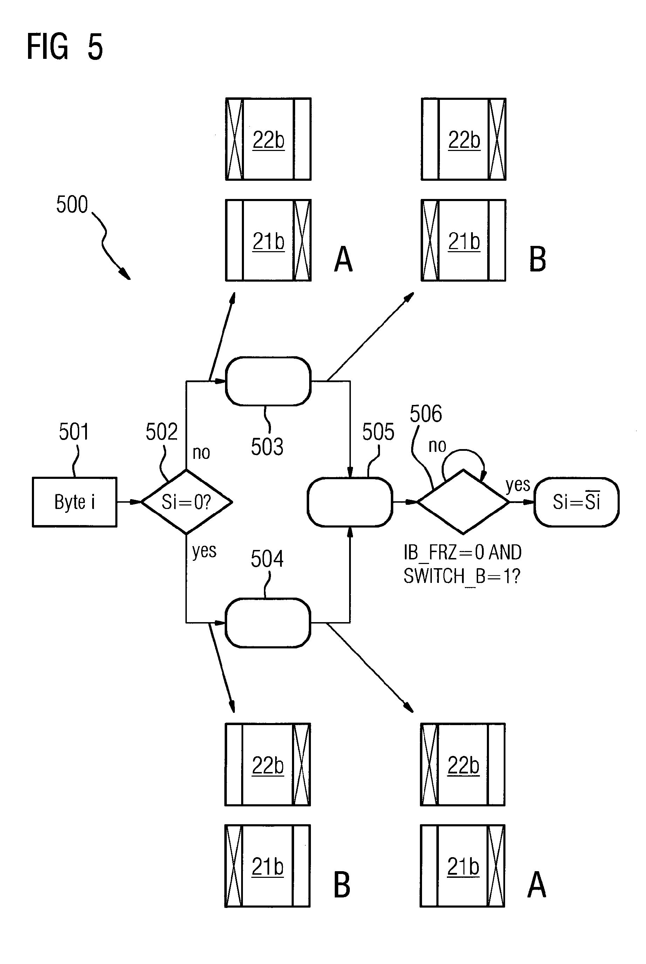

Mit der FIG 5 ist ein Programmablauf 500 für das Schreiben von Daten des Rückwandbussteuerwerkes 32 in den oder in die Eingabezwischenspeicher 21b,22b dargestellt. Beginnend mit einem Schreibauftrag 501, in welchem das Rückwandbussteuerwerk das Byte i in die entsprechenden Eingabezwischenspeicher 21b,22b schreiben möchte, wird zunächst in einer Abfrageoperation 502 abgefragt ob die zu dem Byte i zugehörige Semaphore Sᵢ den Wert "0" hat. Hat die Semaphore Sᵢ den Wert "1" so wird die Abfrageoperation 501,502 über den NEIN-Zweig verlassen und es wird ein Schreibzugriff 503 auf den ersten Eingabezwischenspeicher 21b mit den Byte I erlaubt.

Hatte die Semaphore Sᵢ den Wert = "0" so würde über den JA-Zweig der Abfrageoperation 502 ein Schreibzugriff 504 auf den zweiten Eingabezwischenspeicher 22b erlaubt werden. Nach einem erfolgreichen Schreibzugriff entweder auf den ersten Eingabezwischenspeicher 21b oder auf den zweiten Eingabezwischenspeicher 22b wird über eine Anmeldung 505 zum Speicherwechsel mit einer Abfrageoperation 506 abgefragt, ob ein zweiter Statusindikator 51 = "0" ist. Zusätzlich wird abgefragt, ob ein Freigabe-Signal für einen Speicherwechsel vorliegt. Das Freigabesignal kommt beispielsweise vom Rückwandbussteuerwerk und signalisiert, ob die eingetragenen Daten vollständig sind, oder ob noch Datenpakte fehlen. Ist das Freigabesignal gesetzt, wird der Speicherwechsel durchgeführt und die Semaphore Sᵢ wird negiert, wodurch im oberen Zweig mit dem Schreibzugriff 503 auf den ersten Eingabezwischenspeicher 21b von dem ersten stabilen Zustand A in den zweiten stabilen Zustand B gewechselt wird und über den Schreibzugriff 504 auf den zweiten Eingabezwischenspeicher 22b wird anders herum von dem zweiten stabilen Zustand B in den ersten stabilen Zustand A der bytegranular adressierten Speicherzellen gewechselt.

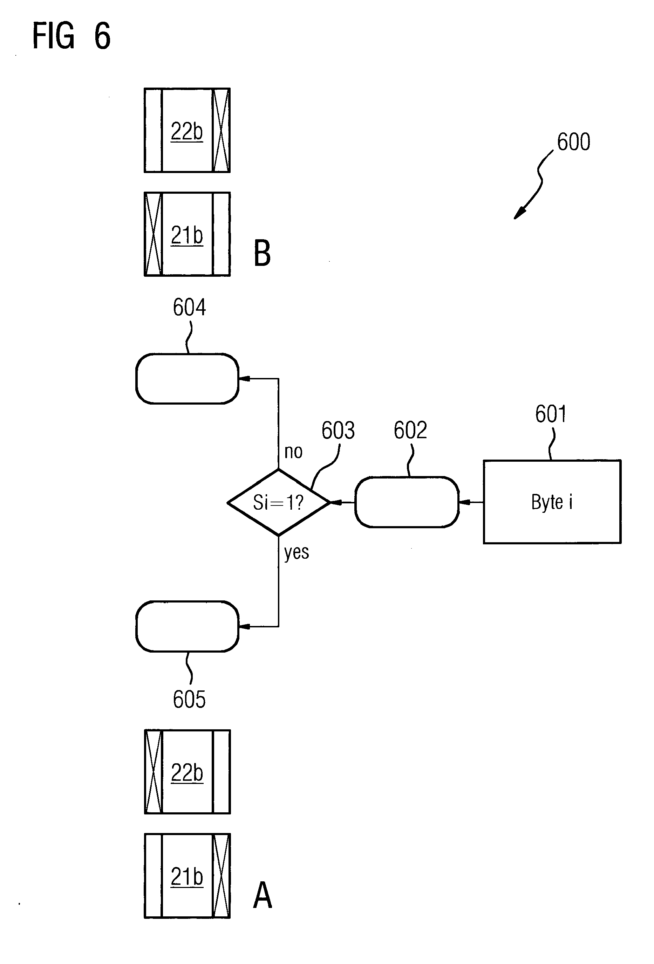

Die FIG 6 zeigt einen Programmablauf 600 für das Lesen von Daten aus den Eingabezwischenspeichern 21b,22b. Beginnend mit einem Leseauftrag 601 wird ein Lesezugriff der in dem ASIC-Baustein implementierten Software auf den Eingabezwischenspeicher 21b,21a initiiert. Da nun Eingabe-Daten von dem Rückwandbus an das Automatisierungsgerät weitergeleitet werden sollen, muss vor dem Lesezugriff über eine Setzeoperation 602 der zweite Statusindikator 51 gesetzt werden, wodurch letztendlich ein "IB_FREEZE"-Kommando abgesetzt wird, welches bedeutet, dass die entsprechenden Eingabezwischenspeicher 21a und 21b nun eingefroren sind. Eine Abfrageoperation 603 fragt über die bytegranulare Adressierung mit dem Index i ab, ob die Semaphore Sᵢ dieses zu lesenden Bytes i = "1" ist. Ist dies der Fall, darf über einen Lesezugriff 605 auf den zweiten Eingabezwischenspeicher 22b zugegriffen werden und für den Fall, dass die Semaphore Sᵢ = "0" ist darf über einen weiteren Lesezugriff 604 auf den ersten Eingabezwischenspeicher 21a zugegriffen werden. Erläuternd sind dem Programmablauf 600 zu den entsprechenden Speicherzugriffzweigen der erste stabile Zustand A und der zweite stabile Zustand B der bytegranularen Speicherzellen wiederum zugeordnet.

## Patentansprüche

1. Schnittstellenvorrichtung (1) für den Datenaustausch von Daten zwischen einem ersten Bussystem (11a) und einem zweiten Bussystem (12a), wobei an das zweite Bussystem (12a) ein Ein-/Ausgabegerät (100) anschließbar ist und
innerhalb des Ein-/Ausgabegerätes (100)
- ein Steckplatz (101) und
- ein Untersteckplatz (111) zum Ausgeben oder Annehmen von Ein-/Ausgabe-Daten adressierbar sind,
umfassend
- eine erste Sende-/Empfangseinrichtung (11) für Daten des ersten Bussystems (11a),
- eine zweite Sende-/Empfangseinrichtung (12) für Daten des zweiten Bussystems (12a),
- eine Datenübergabeeinrichtung (20) mit einem Übergabespeicher (21,22),
- eine Steuereinrichtung (30) ausgestaltet zur Steuerung der Datenablage und zur Koordinierung von Schreibzugriffen in die bzw. auf die Datenübergabeeinrichtung (20),
**dadurch gekennzeichnet, dass**
die Steuereinrichtung (30) mit einem Listenspeichermittel (40) in Verbindung steht, in welchem eine Datenstruktur zur Adressierung der Daten für das Ein-/Ausgabegerät (100) abgespeichert ist, wobei die Datenstruktur für eine Mehrzahl von Untersteckplätzen (111) in einem Telegrammformat der Telegramme des ersten Bussystems (11a) vorgegeben ist und jeweils
- einen Speicheroffset (44) bezogen auf eine Startadresse (45) des Übergabespeichers (21,22) und
- eine Datenlänge (46) der Ein-/Ausgabe-Daten aufweist,
- dabei ist den Untersteckplätzen (111) in der Datenstruktur ein Index (i) zugeordnet,
wobei die Steuereinrichtung (30) weiterhin dazu ausgestaltet ist bei einer Aktualisierung der Ein-/Ausgabe-Daten mit Hilfe des Index (i) die Schreibzugriffe in der Datenübergabeeinrichtung (20) byteweise zu koordinieren.

2. Schnittstellenvorrichtung (1) nach Anspruch 1, wobei der Übergabespeicher (21,22) in einen
- Ausgabezwischenspeicher (21a,22a) und
- einen Eingabezwischenspeicher (21b,22b) aufgeteilt ist, dabei ist der Ausgabezwischenspeicher (21a,22a) dazu ausgestaltet Daten von dem ersten Bussystem (11a) zwischenzuspeichern und für das zweite Bussystem (12a) als Ausgabedaten für das Ein-/Ausgabegerät (100) bereitzustellen und der Eingabezwischenspeicher (21b,22b) ist dazu ausgestaltet Daten von dem zweiten Bussystem (12a) zwischenzuspeichern und für das erste Bussystem (11a) als Eingabedaten des Ein-/Ausgabegerätes (100) bereitzustellen.

3. Schnittstellenvorrichtung (1) nach Anspruch 1 oder 2, wobei der Übergabespeicher (21,22) als
- ein erster Übergabespeicher (21) und als
- ein zweiter Übergabespeicher (22) ausgestaltet ist, welcher derart mit der Steuereinrichtung (30) in Verbindung stehen, dass eine Datenablage oder ein Schreibzugriff entweder nur auf den ersten Übergabespeicher (21) oder nur auf den zweiten Übergabespeicher (22) erfolgen kann.

4. Schnittstellenvorrichtung (1) nach Anspruch 3, wobei die Steuereinrichtung (30) ein Sperrmittel (31) aufweist, welches ausgestaltet ist vor
- einem Schreibzugriff mit Ausgabedaten auf den Ausgabezwischenspeicher (21a,22a) oder vor
- einem Lesezugriff von Eingabedaten auf den Eingabezwischenspeicher (21b,22b)
einen Statusindikator (50,51) zu setzen, dabei ist die Steuereinrichtung (30) weiterhin dazu ausgestaltet, dass das Sperrmittel (31) bei dem gesetzten Statusindikator (50,51) einen Wechsel zwischen dem ersten und dem zweiten Übergabespeicher (21,22) blockiert.

5. Schnittstellenvorrichtung (1) nach einem der Ansprüche 2 bis 4, wobei die Steuereinrichtung (30) weiterhin dazu ausgestaltet ist bei
- einem Lesezugriff von Ausgabedaten aus dem Ausgabezwischenspeicher (21a,22a),
- eine Semaphore (Sᵢ) abzufragen und je nach Zustand der Semaphore (Sᵢ)
- entweder die Ausgabedaten aus dem
- ersten Übergabespeicher (21) oder aus dem zweiten Übergabespeicher (22)
auszulesen.

6. Schnittstellenvorrichtung (1) nach Anspruch 5, wobei der Übergabespeicher (21,22) byteweise aufgebaut ist und jedem Byte eine Semaphore (Sᵢ) mit dem Index (i) zugeordnet ist, dabei ist einem Byte im ersten Übergabespeicher (21) die Semaphore (Sᵢ) mit einem ersten Zustand zugeordnet und einem korrespondierenden Byte im zweiten Übergabespeicher (22) die Semaphore (Sᵢ⁻¹) mit einem zweiten Zustand zugeordnet, wobei der zweite Zustand dem negierten ersten Zustand entspricht.

7. Schnittstellenvorrichtung (1) nach einem der Ansprüche 1 bis 6, wobei das Listenspeichermittel (40) doppelt ausgeführt ist und als ein erstes Listenspeichermittel (41) und als ein zweites Listenspeichermittel (42) ausgestaltet ist.

8. Schnittstellenvorrichtung (1) nach einem der Ansprüche 1 bis 7, ausgestaltet zum Betrieb im Verbund eines industriellen Automatisierungssystem, wobei die erste Sende-/Empfangseinrichtung (11) für Daten des ersten Bussystems (11a) ausgestaltet ist Daten eines Feldbusses der industriellen Automatisierungstechnik zu senden und zu empfangen und die zweite Sende-/Empfangseinrichtung (12) für Daten des zweiten Bussystems (12a) ausgestaltet ist Daten eines Rückwandbusses des Ein-/Ausgabegerät (100), welches als eine dezentrale Peripherie der industriellen Automatisierungstechnik ausgestaltet ist, zu senden und zu empfangen, dabei weist die Steuereinrichtung (30) weiterhin ein Rückwandbussteuerwerk (32) und ein Feldbussteuerwerk (33) auf.

9. Verfahren für den konsistenten Datenaustausch von Daten zwischen einem ersten Bussystem (11a) und einem zweiten Bussystem (12a), wobei an das zweite Bussystem (12a) ein Ein-/Ausgabegerät (100) angeschlossen wird und
innerhalb des Ein-/Ausgabegerätes (100)
- ein Steckplatz (101) und
- ein Untersteckplatz (111) zum Ausgeben oder Annehmen von Ein-/Ausgabe-Daten adressiert wird, und
- eine erste Sende-/Empfangseinrichtung (11) zum Senden und Empfangen von Daten des ersten Bussystems (11a),
- eine zweite Sende-/Empfangseinrichtung (12) zum Senden und Empfangen von Daten für das zweite Bussystem (12a) betrieben wird, wobei
- eine Datenübergabeeinrichtung (20) mit einem Übergabespeicher (21,22),
- über eine Steuereinrichtung (30) zur Steuerung der Datenablage und zur Koordinierung von Schreibzugriffen in die bzw. auf die Datenübergabeeinrichtung (20) gesteuert wird,
**dadurch gekennzeichnet, dass**
die Steuereinrichtung (30) eine Datenstruktur aus einem Listenspeichermittel (40) auswertet, wobei die Datenstruktur zur Adressierung der Daten für das Ein-/Ausgabegerät (100) vor Beginn des Datenaustausches in dem Listenspeichermittel (40) abgespeichert wurde und die Datenstruktur aufgrund einer Mehrzahl von Untersteckplätzen (111) in einem Telegrammformat der Telegramme des ersten Bussystems (11a) definiert wird und jeweils
- einen Speicheroffset (44) bezogen auf eine Startadresse (45) des Übergabespeichers (21,22) und
- eine Datenlänge (46) der Ein-/Ausgabe-Daten aufweist,
- dabei wird den Untersteckplätzen (111) in der Datenstruktur ein Index (i) zugeordnet,
wobei die Steuereinrichtung (30) bei einer Aktualisierung der Ein-/Ausgabe-Daten mit Hilfe des Index (i) die Schreibzugriffe in der Datenübergabeeinrichtung (20) byteweise koordiniert.

10. Verfahren nach Anspruch 9, wobei
der Übergabespeicher (21,22) in einem
- Ausgabezwischenspeicher (21a,22a) und
- einem Eingabezwischenspeicher (21b,22b) aufgeteilt wird, dabei wird der Ausgabezwischenspeicher (21a,22a) betrieben Daten von dem ersten Bussystem (11a) zwischenzuspeichern und für das zweite Bussystem (12a) als Ausgabedaten für das Ein-/Ausgabegerät (100) bereitzustellen und
der Eingabezwischenspeicher (21b,22b) wird betrieben Daten von dem zweiten Bussystem (12a) zwischenzuspeichern und für das erste Bussystem (11a) als Eingabedaten des Ein-/Ausgabegerätes (100) bereitzustellen.

11. Verfahren nach Anspruch 9 oder 10, wobei der Übergabespeicher (21,22) in
- einen ersten Übergabespeicher (21) und
- einen zweiten Übergabespeicher (22) unterteilt wird,
und eine Datenablage oder ein Schreibzugriff derart gesteuert wird, das entweder nur auf den ersten Übergabespeicher (21) oder nur auf den zweiten Übergabespeicher (22) zugegriffen wird.

12. Verfahren nach einem der Ansprüche 9 bis 11, wobei in der Steuereinrichtung (30) ein Sperrmittel (31) betrieben wird, wobei vor
- einem Schreibzugriff mit Ausgabedaten auf den Ausgabezwischenspeicher (21a,22a) oder vor
- einem Lesezugriff von Eingabedaten auf den Eingabezwischenspeicher (21b,22b)
ein Statusindikator (50,51) gesetzt wird, und bei dem gesetzten Statusindikator (50,51) ein Wechsel zwischen dem ersten und dem zweiten Übergabespeicher (21,22) blockiert wird.

13. Verfahren nach einem der Ansprüche 9 bis 12, wobei bei
- einem Lesezugriff von Ausgabedaten aus dem Ausgabezwischenspeicher (21a,22a)
- eine Semaphore(Sᵢ) abgefragt wird und je nach Zustand der Semaphore (Sᵢ)
- entweder die Ausgabedaten aus dem
- ersten Übergabespeicher (21) oder aus dem zweiten Übergabespeicher (22)
gelesen werden.

14. Verfahren nach einem der Ansprüche 9 bis 13, wobei die Daten im Übergabespeicher (21,22) byteweise abgelegt werden und jedem Byte eine Semaphore (Sᵢ) mit dem Index (i) zugeordnet wird, dabei wird einem Byte im ersten Übergabespeicher (21) die Semaphore (Sᵢ) mit einem ersten Zustand zugeordnet und dem korrespondieren Byte im zweiten Übergabespeicher (22) die Semaphore (Sᵢ⁻¹) mit einem zweiten Zustand zugeordnet, wobei der zweite Zustand dem negierten ersten Zustand entspricht.

15. Verfahren nach einem der Ansprüche 9 bis 14 wobei das Listenspeichermittel (40) doppelt geführt wird und zwar wird ein erstes Listenspeichermittel (41) und ein zweites Listenspeichermittel (42) angelegt.

16. Verfahren nach einem der Ansprüche 9 bis 15 angewendet im Verbund eines industriellen Automatisierungssystem, wobei die erste Sende-/Empfangseinrichtung (11) für Daten eines Feldbusses der industriellen Automatisierungstechnik betrieben wird und die zweite Sende-/Empfangseinrichtung (12) für Daten eines Rückwandbusses des Ein-/Ausgabegerät (100), welches als eine dezentrale Peripherie der industriellen Automatisierungstechnik ausgestaltet ist, betrieben wird, dabei wird in der Steuereinrichtung (30) weiterhin ein Rückwandbussteuerwerk (32) und ein Feldbussteuerwerk (33) betrieben.

## Claims

1. Interface device (1) for the exchange of data between a first bus system (11a) and a second bus system (12a), wherein an input/output device (100) is able to be connected to the second bus system (12a) and
within the input/output device (100)
- a slot (101) and
- a subslot (111) for outputting or accepting input/output data are able to be addressed,
comprising
- a first transceiver device (11) for data of the first bus system (11a),
- a second transceiver device (12) for data of the second bus system (12a),
- a data transfer device (20) with a transfer memory (21, 22),
- a control device (30) embodied for controlling data storage and for coordinating write accesses in or at the data transfer device (20),
**characterised in that**
the control device (30) is connected to a list storage means (40) in which a data structure for addressing the data for the input/output device (100) is stored, wherein the data structure is predetermined for a plurality of subslots (111) in a telegram format of the telegrams of the first bus system (11a) and respectively
- has a memory offset (44) related to a start address (45) of the transfer memory (21, 22) and
- a data length (46) of the input/output data,
- in this case the subslots (111) in the data structure are assigned an index (i),
wherein the control device (30) is further embodied, for an update of the input/output data with the aid of the index (i), to coordinate the write accesses in the data transfer device (20) byte-by-byte.

2. Interface device (1) according to claim 1, wherein the transfer memory (21, 22) is divided up into an
- output buffer (21a, 22a) and
- an input buffer (21b, 22b),
in this case the output buffer (21a, 22a) is embodied to buffer data from the first bus system (11a) and to provide it for the second bus system (12a) as output data for the input/output device (100) and the input buffer (21b, 22b) is embodied to buffer data from the second bus system (12a) and to provide it for the first bus system (11a) as input data of the input/output device (100).

3. Interface device (1) according to claim 1 or 2, wherein the transfer memory (21, 22) is embodied as
- a first transfer memory (21) and as
- a second transfer memory (22),
which are connected to the control device (30) such that a storage of data or a write access can be undertaken either only to the first transfer memory (21) or only to the second transfer memory (22).

4. Interface device (1) according to claim 3, wherein the control device (30) has a blocking means (31) which is embodied, before
- a write access with output data to the output buffer (21a, 22a) or before
- a read access of input data to the input buffer (21b, 22b), to set a status indicator (50, 51), in this case the control device (30) is further embodied so that the blocking means (31) blocks a switch between the first and the second transfer memory (21, 22) when the status indicator (50, 51) is set.

5. Interface device (1) according to one of claims 2 to 4, wherein the control device (30) is further embodied, for
- a read access of output data from the output buffer (21a, 22a),
- to interrogate a semaphore (Sᵢ) and depending on the state of the semaphore (Sᵢ)
- either to read out the output data from the
- first transfer memory (21) or from the second transfer memory (22).

6. Interface device (1) according to claim 5, wherein the transfer memory (21, 22) is structured byte-by-byte and each byte is assigned a semaphore (Sᵢ) with the index (i), in this case the byte in the first transfer memory (21) is assigned the semaphore (Sᵢ) with a first state and a corresponding byte in the second transfer memory (22) is assigned the semaphore (Sᵢ⁻¹) with a second state, wherein the second state corresponds to the negated first state.

7. Interface device (1) according to one of claims 1 to 6, wherein the list storage means (40) is designed duplicated and is embodied as a first list storage means (41) and as a second list storage means (42).

8. Interface device (1) according to one of claims 1 to 7, embodied for operation in the network of an industrial automation system, wherein the first transceiver device (11) is embodied for data of the first bus system (11a) for sending and receiving data of a field bus of the industrial automation technology and the second transceiver device (12) is embodied for data of the second bus system (12a) for sending and receiving data of a backplane bus of the input/output device (100), which is equipped as a decentralised peripheral of the industrial automation technology, in this case the control device (30) also has a backplane bus controller (32) and a field bus controller (33).

9. Method for consistent exchange of data between a first bus system (11a) and a second bus system (12a), wherein an input/output device (100) is connected to the second bus system (12a) and
within the input/output device (100)
a slot (101) and
- a subslot (111) for outputting or accepting input/output data is addressed, and
- a first transceiver device (11) is operated for sending and receiving data of the first bus system (11a),
- a second transceiver device (12) is operated for sending and receiving data for the second bus system (12a), wherein
- a data transfer device (20) with a transfer memory (21, 22),
- is controlled via a control device (30) for controlling the data storage and for coordinating write accesses into or at the data transfer device (20),
**characterised in that**
the control device (30) evaluates a data structure from a list storage means (40), wherein the data structure for addressing the data for the input/output device (100) was stored before the beginning of the data exchange in the list storage means (40) and the data structure is defined on the basis of a plurality of subslots (111) in a telegram format of telegrams of the first bus system (11a) and in each case
- has a memory offset (44) related to a start address (45) of the transfer memory (21, 22) and
- a data length (46) of the input/output data,
- in this case the subslots (111) are assigned an index (i) in the data structure,
wherein the control device (30), for an updating of the input/output data, coordinates the write accesses into the data transfer device (20) byte-by-byte with the aid of the index (i).

10. Method according to claim 9, wherein
the transfer memory (21, 22) is divided into an
- output buffer (21a, 22a) and
- an input buffer (21b, 22b),
in this case the output buffer (21a, 22a) is operated to buffer data from the first bus system (11a) and to provide it for the second bus system (12a) as output data for the input/output device (100) and
the input buffer (21b, 22b) is operated to buffer data from the second bus system (12a) and to provide it for the first bus system (11a) as input data of the input/output device (100).

11. Method according to claim 9 or 10, wherein the transfer memory (21, 22) is divided up into
- a first transfer memory (21) and
- a second transfer memory (22),
and a data storage or a write access is controlled such that there is only access to the first transfer memory (21) or there is only access to the second transfer memory (22).

12. Method according to one of claims 9 to 11, wherein a blocking means (31) is operated in the control device (30), wherein, before
- a write access with output data to the output buffer (21a, 22a), or before
- a read access of input data to the input buffer (21b, 22b), a status indicator (50, 51) is set, and in which with the set status indicator (50, 51) a switch between the first and the second transfer memory (21, 22) is blocked.

13. Method according to one of claims 9 to 12, wherein for
- a read access of output data from the output buffer (21a, 22a)
- a semaphore (Sᵢ) is interrogated and depending on the state of the semaphore (Sᵢ)
- the output data is read either from
- the first transfer memory (21) or from second transfer memory (22).

14. Method according to one of claims 9 to 13, wherein the data is stored byte-by-byte in the transfer memory (21, 22) and each byte is assigned a semaphore (Sᵢ) with the index (i), in this case the byte in the first transfer memory (21) is assigned the semaphore (Sᵢ) with a first state and the corresponding byte in the second transfer memory (22) is assigned the semaphore (Sᵢ⁻¹) with a second state, wherein the second state corresponds to the negated first state.

15. Method according to one of claims 9 to 14 wherein the list storage means (40) is kept as a duplicated list and indeed a first list storage means (41) and a second list storage means (42) are created.

16. Method according to one of claims 9 to 15 applied in the network of an industrial automation system, wherein the first transceiver device (11) is operated for data of a field bus of the industrial automation technology and the second transceiver device (12) is operated for data of a backplane bus of the input/output device (100), which is embodied as the decentralised peripheral of the industrial automation technology, in this case a backplane bus controller (32) and a field bus controller (33) are also operated in the control unit (30).

## Revendications

1. Dispositif ( 1 ) d'interface pour l'échange de données entre un premier système ( 11a ) de bus et un deuxième système ( 12a ) de bus, un appareil ( 100 ) d'entrée/sortie pouvant être raccordé au deuxième système ( 12a ) de bus et
peuvent être adressés à l'intérieur de l'appareil ( 100 ) d'entrée/sortie
- un emplacement ( 101 ) d'enfichage et
- un sous-emplacement ( 111 ) d'enfichage pour l'émission ou la prise de données d'entrée/sortie,
comprenant
- un premier dispositif ( 11 ) d'émission/réception de données du premier système ( 11a ) de bus,
- un deuxième dispositif ( 12 ) d'émission/réception de données du deuxième système ( 12a ) de bus,
- un dispositif ( 20 ) de transmission de données ayant une mémoire ( 21 , 22 ) de transmission,
- un dispositif ( 30 ) de commande conformé pour la commande du dépôt de données et pour la coordination d'accès en écriture, dans le dispositif ( 20 ) de transmission de données,
**caractérisé en ce que**
le dispositif ( 30 )de commande est en liaison avec un moyen ( 40 ) de mémoire de liste, dans lequel une structure de données est mémorisée pour l'adressage des données pour l'appareil ( 100 ) d'entrée/sortie, la structure de données étant prévue pour une multiplicité de sous-emplacements ( 111 ) d'enfichage dans un format des télégramme du premier système ( 11a ) de bus et ayant respectivement
- un décalage ( 44 ) de mémoire rapporté à une adresse ( 45 ) de début de la mémoire ( 21 , 22 ) de transmission et
- une longueur ( 46 ) des données d'entrée/sortie,
- un indice ( i ) étant affecté dans la structure de données aux sous-emplacements ( 111 ) d'affichage,
dans lequel le dispositif ( 30 ) de commande est conformé en outre pour, lors d'une mise à jour des données d'entrée/sortie, coordonner octet par octet à l'aide de l'indice ( i ) les accès en écriture dans le dispositif ( 20 ) d'entrée de données.

2. Dispositif ( 1 ) d'interface suivant la revendication 1, dans lequel la mémoire de transmission est subdivisée
- en une mémoire ( 21a , 22a ) tampon de sortie et
- en une mémoire ( 21b , 22b ) tampon d'entrée,
la mémoire ( 21a , 22a ) tampon de sortie est conformée pour mémoriser intermédiairement des données du premier système ( 11a ) de bus et pour les mettre à disposition du deuxième système ( 12a ) de bus en tant que données de sortie de l'appareil ( 100 ) d'entrée/sortie, et la mémoire ( 21b , 22b ) tampon d'entrée est conformée pour mémoriser intermédiairement des données du deuxième système ( 12a ) de bus et pour les mettre à disposition du premier système ( 11a ) de bus comme données d'entrée de l'appareil ( 100 ) d'entrée/sortie.

3. Dispositif ( 1 ) d'interface suivant la revendication 1 ou 2, dans lequel la mémoire ( 21 , 22 ) de transmission est conformée en
- une première mémoire ( 21 ) de transmission et
- une deuxième mémoire ( 22 ) de transmission,
qui sont en liaison avec le dispositif ( 30 ) de commande de manière à ce qu'un dépôt de données ou un accès en écriture ne puisse s'effectuer que sur la première mémoire ( 21 ) de transmission ou que sur la deuxième mémoire ( 22 ) de transmission.

4. Dispositif ( 1 ) d'interface suivant la revendication 3, dans lequel le dispositif ( 30 ) de commande a un moyen ( 31 ) de blocage qui est conformé pour,
- avant un accès en écriture avec des données de sortie sur la mémoire ( 21a , 22a ) tampon de sortie ou
- avant un accès en lecture de données d'entrée sur la mémoire ( 21b , 22b ) tampon d'entrée,
mettre un indicateur ( 50 , 51 ) de statut, le dispositif ( 30 ) de commande étant conformé en outre de manière à ce que le moyen ( 31 ) de blocage bloque, lorsque l'indicateur ( 50 , 51 ) de statut est mis, un échange entre la première et la deuxième mémoires ( 21 , 22 ) de transmission.

5. Dispositif ( 1 ) d'interface suivant l'une des revendications 2 à 4, dans lequel le dispositif ( 30 ) de commande est conformé en outre pour,
- lors d'un accès en écriture de données de sortie de la mémoire ( 21a , 22a ) tampon de sortie,
- interroger un sémaphore ( Sᵢ ) et, suivant l'état du sémaphore ( Sᵢ ),
- lire les données de sortie
- dans la première mémoire ( 21 ) de transmission ou dans la deuxième mémoire ( 22 ) de transmission.

6. Dispositif ( 1 ) d'interface suivant la revendication 5, dans lequel la mémoire ( 21 ) de transmission est constituée octet par octet et un sémaphore ( Sᵢ ) ayant l'indice ( i ) est affecté à chaque octet, le sémaphore ( Sᵢ ) ayant un premier état est affecté à un octet dans la première mémoire ( 21 ) de transmission et le sémaphore ( Sᵢ⁻¹ ) ayant un deuxième état est affecté à un octet correspondant dans la deuxième mémoire ( 22 ) de transmission, le deuxième état correspondant au premier état inversé.

7. Dispositif ( 1 ) d'interface suivant l'une des revendications 1 à 6, dans lequel le moyen ( 40 ) de mémoire de liste est réalisé en double et est sous la forme d'un premier moyen ( 41 ) de mémoire de liste et d'un deuxième moyen ( 42 ) de mémoire de liste.

8. Dispositif ( 1 ) d'interface suivant l'une des revendications 1 à 7, conformé pour fonctionner en liaison avec un système d'automatisation industriel, dans lequel le premier dispositif ( 11 ) d'émission/réception de données du premier système ( 11a ) de bus est conformé pour émettre et pour recevoir des données d'un bus sur site de la technique d'automatisation industrielle et le deuxième dispositif ( 12 ) d'émission/réception de données du deuxième système ( 12a ) de bus est conformé pour émettre et pour recevoir des données d'un bus de fond de l'appareil ( 100 ) d'entrée/sortie, qui est conformé en périphérie décentralisée de la technique d'automatisation industrielle, le dispositif ( 30 ) de commande ayant en outre une unité ( 32 ) de commande de bus de fond et une unité ( 33 ) de commande de bus sur site.

9. Procédé d'échange cohérent de données entre un premier système ( 11a ) de bus et un deuxième système ( 12a ) de bus, un appareil ( 100 ) d'entrée/sortie étant raccordé au deuxième système ( 12a ) de bus et
- il est adressé à l'intérieur de l'appareil ( 100 ) d'entrée/sortie
- un emplacement ( 101 ) d'enfichage et
- un sous-emplacement ( 111 ) d'affichage pour l'émission ou la prise de données d'entrée/sortie et
- un premier dispositif ( 11 ) d'émission/réception pour l'émission et la réception de données du premier système ( 11a ) de bus,
- un deuxième dispositif ( 12 ) d'émission/réception pour l'émission et la réception de données du deuxième système ( 12a ) de bus, dans lequel on commande
- un dispositif ( 20 ) de transmission de données ayant une mémoire ( 21 , 22 ) de transmission de données,
- par un dispositif ( 30 ) de commande du dépôt de données et de la coordination d'accès en écriture dans le dispositif ( 20 ) de transmission de données,
**caractérisé en ce que**
le dispositif ( 30 ) de commande exploite une structure de données d'un moyen ( 40 ) de mémoire de liste, la structure de données ayant, pour l'adressage des données pour l'appareil ( 100 ) d'entrée/sortie, été, avant le début de l'échange de données, mémorisée dans le moyen ( 40 ) de mémoire de liste et la structure de données étant définie sur la base d'une multiplicité de sous-emplacements ( 111 ) d'enfichage dans un format de télégramme du premier système ( 11a ) de bus et a respectivement
- un décalage ( 44 ) de mémoire rapporté à une adresse ( 45 ) de début de la mémoire ( 21 , 22 ) de transmission et
- une longueur ( 46 ) des données d'entrée/sortie
- un indice ( i ) étant affecté aux sous-emplacements ( 111 ) d'enfichage dans la structure de données,
le dispositif ( 30 ) de commande coordonnant octet par octet, lors d'une mise à jour des données d'entrée/sortie, les accès en écriture dans le dispositif ( 20 ) de transmission de données à l'aide de l'indice ( i ).

10. Procédé suivant la revendication 9, dans lequel la mémoire ( 21 , 22 ) de transmission est subdivisée
- en une mémoire ( 21a , 22a ) tampon de sortie et
- en une mémoire ( 21b , 22b ) tampon d'entrée,
la mémoire ( 21a , 22a ) tampon de sortie mémorise intermédiairement des données du premier système ( 11a ) de bus et les met à la disposition du deuxième système ( 12a ) de bus comme données de sortie pour l'appareil ( 100 ) d'entrée/sortie et
la mémoire ( 21b , 22b ) tampon d'entrée mémorise intermédiairement des données du deuxième système ( 12a ) de bus et les met à la disposition du premier système ( 11a ) de bus comme données d'entrée de l'appareil ( 100 ) d'entrée/ sortie.

11. Procédé suivant la revendication 9 ou 10, dans lequel la mémoire ( 21 , 22 ) de transmission est subdivisée
- en une première mémoire ( 21 ) de transmission et
- en une deuxième mémoire ( 22 ) de transmission,
et un dépôt de données ou un accès en écriture est commandé de manière à n'avoir accès qu'à la première mémoire ( 21 ) de transmission ou qu'à la deuxième mémoire ( 22 ) de transmission.

12. Procédé suivant l'une des revendications 9 à 11, dans lequel un moyen ( 31 ) de blocage fonctionne dans le dispositif ( 30 ) de commande, dans lequel
- avant un accès en écriture avec des données de sortie sur le mémoire ( 21a , 22a ) tampon de sortie ou
- avant un accès en écriture de données d'entrée sur la mémoire ( 21b , 22b ) tampon d'entrée
est mis un indicateur ( 50 , 51 ) de statut et, lorsque l'indicateur ( 50 , 51 ) de statut est mis, un échange entre la première mémoire et la deuxième mémoire ( 21 , 22 ) de transmission est bloqué.

13. Procédé suivant l'une des revendications 9 à 12, dans lequel
- lors d'un accès en lecture de données de sortie de la mémoire ( 21a , 22a ) tampon de sortie
- on interroge un sémaphore ( Sᵢ ) et suivant l'état du sémaphore ( Sᵢ ) on lit
- les données de sortie
- de la première mémoire ( 21 ) de transmission ou de la deuxième mémoire ( 22 ) de transmission.

14. Procédé suivant l'une des revendications 9 à 13, dans lequel on mémorise des données octet par octet dans la mémoire ( 21 , 22 ) de transmission et on affecte à chaque octet un sémaphore ( Sᵢ ) ayant l'indice ( i ), on affecte le sémaphore ( Sᵢ ) ayant un premier état à un octet dans la première mémoire ( 21 ) de transmission et on affecte le sémaphore ( Si¹ ) ayant un deuxième état à l'octet correspondant dans la deuxième mémoire ( 22 ) de transmission, le deuxième état correspondant au premier état inversé.

15. Procédé suivant l'une des revendications 9 à 14, dans lequel on réalise le moyen ( 40 ) de mémoire de liste en double en ayant un premier moyen ( 41 ) de liste et un deuxième moyen ( 42 ) de mémoire de liste.

16. Procédé suivant l'une des revendications 9 à 15, appliqué en liaison avec un système d'automatisation industriel, dans lequel le premier dispositif ( 11 ) d'émission/réception fonctionne pour des données d'un bus sur site de la technique d'automatisation industrielle et le deuxième dispositif ( 12 ) d'émission/réception fonctionne pour des données d'un bus de fond de l'appareil ( 100 ) d'entrée/sortie, qui est conformé comme périphérie décentralisée de la technique d'automatisation industrielle, une unité ( 32 ) de commande de bus de fond et une unité ( 33 ) de commande de bus sur site fonctionnant en outre dans le dispositif ( 30 ) de commande.
